# EUROPEAN PATENT APPLICATION

(11) **EP 3 447 316 A1**
(43) Date of publication of application: **27.02.2019**
(21) Application number: 17785931.1
(22) Date of filing: 14.04.2017
(51) Int. Cl.: F16B 33/02, F16B 35/00, F16B 39/16

(54) **MALE SCREW BODY, FEMALE SCREW BODY, SCREW BODY DESIGN METHOD, SCREW THREAD STRUCTURE**

(30) Priority: 18.04.2016 JP 2016082801
(71) Applicant: Nejilaw Inc., Tokyo 113-0033 (JP)
(72) Inventor: MICHIWAKI, Hiroshi, Tokyo 135-0064 (JP)
(74) Representative: Leihkauf, Steffen Falk
(86) International application number: PCT/JP2017/015372
(87) International publication number: WO 2017/183593

(57) **Abstract**

A male screw body 10 that comprises, a shaft part 12, a first spiral groove 14 that is formed in a circumferential surface of the shaft part 12 and that is set at an appropriate lead angle and/or lead direction, and a second spiral groove 15 that is set at a lead angle and/or lead direction that is different from the lead angle and/or lead direction of the first spiral groove 14, wherein the thread angle formed by a pair of inclined surfaces that extend from the apex to the valley of a screw thread G that is created as a result of the first spiral groove 14 and the second spiral groove 15 being formed to overlap is established at 61°-75°. The present invention thereby makes it possible for a male screw body that comprises two types of overlapping spiral grooves that have different lead angles and/or lead directions to retain high fastening force.

## Description

### Technical Field

Embodiments relate to a special thread structure, a male threaded body and a female threaded body in the special thread structure, and a design method of a special thread and a threaded body having the special thread.

### Background Art

As one of fastening structures, a so-called male threaded body such as a bolt and a so-called female threaded body such as a nut may be used. In a fastening structure by such a threaded body, two types of spiral grooves (e.g., a male threaded portion by a right spiral groove and a male threaded portion by a left spiral groove) having different lead angles and/or lead directions are formed with respect to a single male threaded body. Two types of female threaded bodies (e.g., a right female threaded body and a left female threaded body), such as a double nut, are separately screwed to the two types of spiral grooves. When a relative rotation of the two types of female threaded bodies is suppressed using an engagement method, it is possible to prevent mechanical loosening between a meal screw and a female screw by an axial interference operation or an axial separation operation that occurs due to different lead angles and/or lead directions (Japanese Patent Registration No. 5406168).

### Disclosure of Invention

### Technical Goals

In general, an angle of a thread is 60° in the case of a metric coarse thread/metric fine thread, 60° in the case of a unified coarse thread/unified fine thread, 55° in the case of a Whitworth coarse thread, and 60° in the case of a miniature screw thread. However, a theoretical basis for such an angle is not necessarily clear.

Based on the knowledge of the present inventor by an enormous amount of experiments unknown at a time of the present application, for example, when screwing metric coarse male screw and female screw and thereby separating both in an axial direction, many results show that a fracture does not occur in a shaft portion and fastening is released by deforming or shearing of a thread of the male screw (herein, defined as "thread collapse form"). That is, a state in which the shaft portion of the male screw is broken (herein, defined as "shaft fracture form") may not be obtained. In other words, in a conventional design concept, tensile strength of the shaft portion of the male screw may be regarded to be excessive. Alternatively, strength of the thread may be regarded to be low compared to that of the shaft portion of the male screw. As described, specifications of a conventional threaded body or screw design concept may not meet the requirements for securing a high fastening force.

In particular, in the case of a male threaded body in which two types of spiral grooves are formed to overlap in an axial direction, disclosed in Japanese Patent Registration No. 5406168, load density may easily increase when applying a load to a thread of a male screw and strength of a thread side is insufficient accordingly. In this state, if the conventional screw design concept is applied as is, the strength of the thread side may be insufficient.

Embodiments are conceived based on the sharp research of the present inventor. For example, an aspect is to provide the technical spirit of maintaining a high fastening force in a threaded body having two types of thread structures saving different lead angles and/or lead directions.

### Technical Solutions

According to an aspect, there is provided a male threaded body including a shaft portion, a first spiral groove formed on a circumferential surface of the shaft portion and set to be an appropriate lead angle and/or lead direction; and a second spiral groove formed on the circumferential surface of the shaft portion and set to be a lead angle and/or lead direction that is different from the lead angle and/or lead direction of the first spiral groove. The first spiral groove and the second spiral groove have a thread portion formed by overlapping on the same region in an axial direction of the shaft portion. When a cross-section of the thread portion cut along the axial direction is viewed in an axial-orthogonal direction, a thread angle formed by a single pair of inclined surfaces extending from an apex to a valley of the thread is set to 61° or more or 75° or less.

The thread angle may be set to 73° or less.

The thread angle may be set to 65° or more.

The thread angle may be set within the range of 70°±3°.

There is provided a female threaded body including a female threaded portion. When a cross-section of a female thread portion constituting the female threaded portion and cut along an axial direction is viewed in an axial-orthogonal direction, a thread angle formed by a single pair of inclined surfaces extending from an apex to a valley of a thread of the female threaded portion is set to 61° or more or 75° or less.

The female threaded body may be configured to screw with the male threaded body of any of the above descriptions.

There is provided a threaded body design method including a boundary root diameter extracting process of, in the case of implementing a fastening strength test of performing a relative separation in an axial direction by screwing a female threaded body for verification into a male threaded body for verification using a plurality of male threaded bodies for verification having a constant nominal diameter and different thread angles and root diameters and a plurality of female threaded bodies for verification configured to screw with the male threaded bodies for verification, extracting a degree of variation caused by the thread angle variate from the root diameter (hereinafter, referred to as boundary root diameter) around a boundary of a shaft fracture form and a thread collapse form by causing break of both the shaft fracture form in which a fastening state is released by separating the male threaded body for verification from a shaft portion and the thread collapse form in which the fastening state is released by deforming or shearing of a thread of the male threaded body for verification, a shaft fracture predominant thread angle selecting process of selecting the specific thread angle (hereinafter, shaft fracture predominant thread angle) based on the degree of variation of the boundary root diameter and at which the boundary root diameter is maximized, and a thread angle determining process of applying a thread angle close to the shaft fracture predominant thread angle to the actual male threaded body and/or the female threaded body in the nominal diameter.

The boundary root diameter extracting process may include an individual boundary root diameter extracting process of, in the case of implementing the fastening strength test of performing the relative separation in the axial direction by screwing a female threaded body for verification with a male threaded body for verification using a plurality of male threaded bodies for verification having the constant thread angle and nominal diameter and different root diameters and a plurality of female threaded bodies for verification configured to screw with the male threaded bodies for verification, extracting the specific root diameter (hereinafter, boundary root diameter) around the boundary of the shaft fracture form and the thread collapse form by causing break of both the shaft fracture form in which fastening is released by separating the male threaded body for verification from the shaft portion and the thread collapse form in which fastening is released by deforming or shearing of the thread of the male threaded body for verification, and a process of extracting the degree of variation of the boundary root diameter caused by the thread angle variate by selecting the different plurality of thread angles and by repeatedly implement the individual boundary root diameter extracting process based on each thread angle.

There is provided a male threaded body designed based on the threaded body design method.

There is provided a female threaded body designed based on the threaded body design method of claim 7 or 8.

There is provided a thread structure applied to a male threaded body and/or a female threaded body. A thread angle formed by a single pair of inclined surfaces extending from an apex to a valley of a thread in the thread structure is set to 61° or more or 75° or less.

### Effects

According to embodiments, it is possible to maintain a high fastening force over a long period of time by enhancing a fastening strength with a female threaded body corresponding to a male threaded body in the single male threaded body having a male screw structure that includes two types of spiral grooves having different lead angles and/or lead directions.

### Brief Description of Drawings

FIGS. 1(A) and (B) are a front view and a plan view illustrating a fastening structure of a male threaded body and a female threaded body according to an embodiment, respectively.
FIGS. 2(A) and 2(B) are a cross-sectional front view and a cross-sectional side view illustrating the fastening structure, respectively.
FIG. 3(A) is a cross-sectional front view illustrating the female threaded body, and FIG. 3(B) is a cross-sectional front view illustrating a female threaded body having a spiral direction opposite to that of the female threaded body.
FIG. 4(A) is a front view illustrating the male threaded body, FIG. 4(B) is a cross-sectional view illustrating threads only, and FIG. 4(C) is a plan view illustrating the male threaded body.
FIG. 5(A) is a side view illustrating the male threaded body, FIG. 5(B) is a cross-sectional view illustrating threads only, and FIG. 5(C) is a plan view illustrating the male threaded body.
FIG. 6(A) is an enlarged cross-sectional view illustrating a cross-sectional shape of a thread of the male threaded body, and FIG. 6(B) is an enlarged cross-sectional view illustrating a cross-sectional shape of a thread of the female threaded body.
FIG. 7(A) is a matrix showing a male threaded body group for verification used in a screw design method according to an embodiment, and FIG. 7(B) is a matrix showing a female threaded body group for verification used in a screw design method according to an embodiment.
FIG. 8 illustrates an aspect of a fastening strength test on the male threaded body for verification and the female threaded body for verification.
FIG. 9 is a graph showing a result of a fastening strength test on the male threaded body for verification and the female threaded body for verification of nominal diameter N16.
FIG. 10 is a graph showing a result of a fastening strength test on the male threaded body for verification and the female threaded body for verification of nominal diameter N24.
FIG. 11 is a graph showing a result of the fastening strength test of the male threaded body for verification and the female threaded body for verification of nominal diameter N30.
FIG. 12 is a front view cross-sectional view illustrating a fastening structure of a male threaded body and a female threaded body according to another embodiment.

### Best Mode for Carrying Out the Invention

Hereinafter, embodiments will be described with reference to the accompanying drawings.

### <Male threaded body and female threaded body>

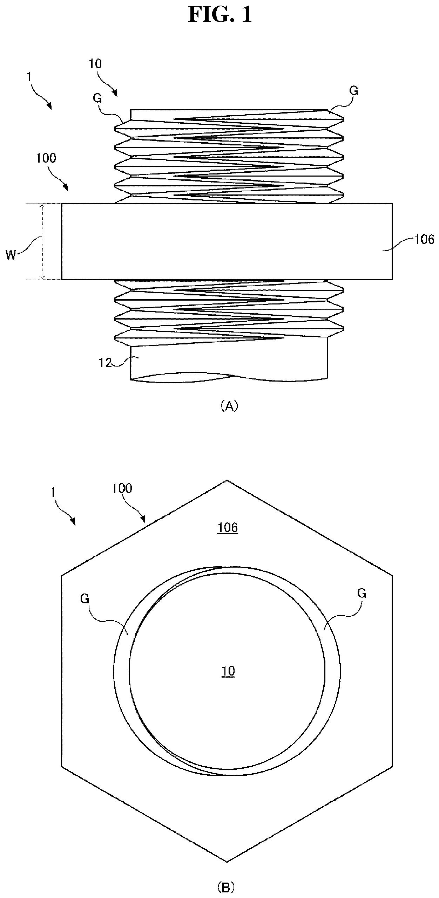

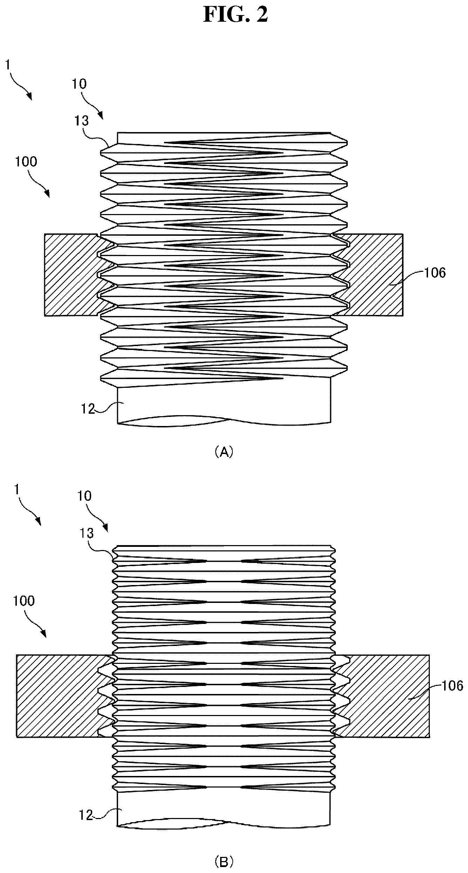

Referring to FIGS. 1 and 2, a fastening structure 1 of a male threaded body 10 and a female threaded body 100 according to an embodiment is implemented by screwing the female threaded body 100 to the male threaded body 10.

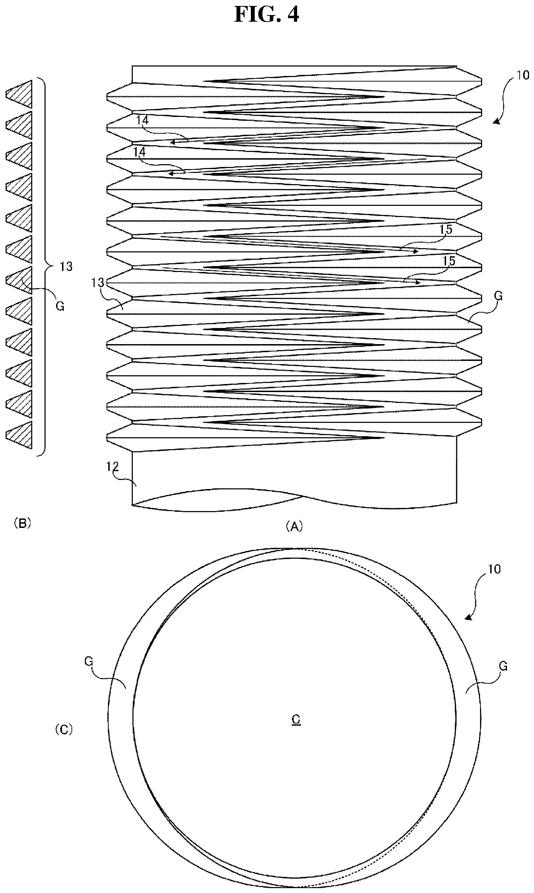

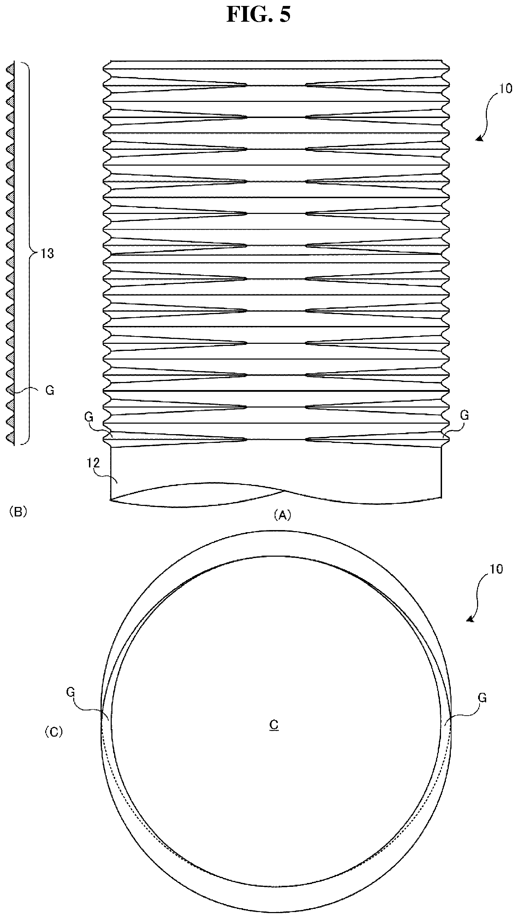

Referring to FIGS. 4 and 5, in the male threaded body 10, a base portion of a shaft portion 12 is present toward an axial end and a male threaded portion 13 on which a male threaded spiral groove is formed is provided. In the present embodiment, two types of male threaded spiral grooves of a first spiral groove 14 configured as a right screw that enables screwing of a female screw-shaped spiral strip including a corresponding right screw and a second spiral groove 15 configured as a left screw that enables screwing of a female screw-shaped spiral strip including a corresponding left screw, with respect to the male threaded portion 13, are formed to overlap on the same region in an axial direction of the male threaded body 10. Also, in addition to the overlapping portion, a single spiral groove region on which a spiral groove is formed in one direction may be provided.

The first spiral groove 14 may screw with a female screw-shaped spiral strip including a corresponding right screw of the female threaded body 100, and the second spiral groove 15 may screw with a female screw-shaped spiral strip including a corresponding left screw of the female threaded body 100) (including a body separate from the female threaded body including the right screw).

Referring to FIG. 4(C) and FIG. 5(C), in the male threaded portion 13, a an approximately crescent-shaped thread G that extends in a circumferential direction relative to a plane direction perpendicular to an axial center (screw axis) C is alternatively provided to one side (left side in figures) and another side (right side in figures) in a diametrical direction of the male threaded portion 13. That is, a ridge line of the thread G extends perpendicularly relative to an axis and a height of the thread G changes to have a high center in the circumferential direction and gradually decreasing ends in the circumferential direction. By configuring the thread G as above, two types of spiral grooves of a virtual spiral groove structure (refer to an arrow indicator 14 of FIG. 4(A)) that turns clockwise and a virtual spiral groove structure (refer to an arrow indicator 15 of FIG. 5(A)) that turns counterclockwise may be formed between the threads G.

In the present embodiment, in this manner, the two types of male threaded spiral grooves of the first spiral groove 14 and the second spiral groove 15 are superimposed on the male threaded portion 13. Accordingly, the male threaded portion 13 may screw with any female threaded body of the right screw and the left screw. Also, the details of the male threaded portion 13 in which two types of male threaded spiral grooves are formed may refer to Japanese Patent Registration No. 4663813 of the inventor of the present application.

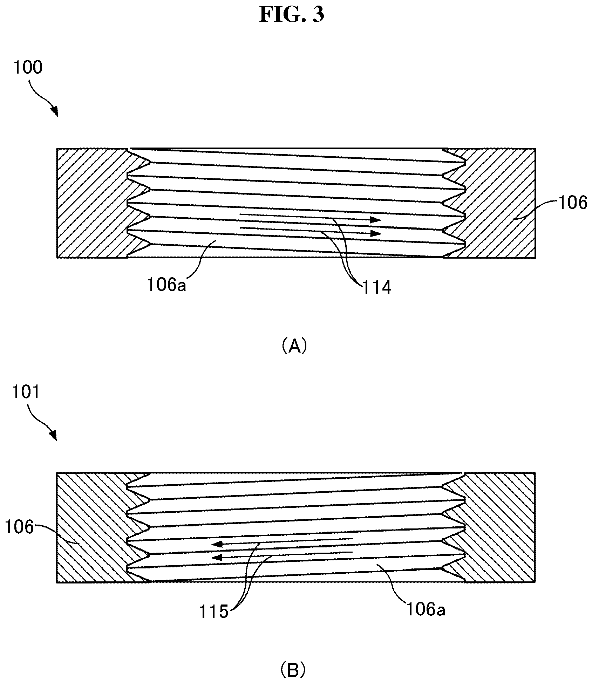

Referring to FIG. 3(A), the female threaded body 100 includes a cylindrical member 106. The cylindrical member 106 is in a so-called hexagonal nut shape and has a through hole portion 106 in its center. An approximate shape of the female threaded body 100 is not limited to the hexagonal nut shape and may be arbitrarily set in, for example, a cylindrical shape, a shape having a knurling tool on the circumferential surface, a star shape, and the like. A first female threaded spiral strip 114 as the right screw is formed in the through hole portion 106a. That is, the first female threaded spiral strip 114 of the cylindrical member 106 engages with the first spiral groove 14 in the male threaded portion 13 of the male threaded body 10.

Also, referring to FIG. 3(B), in the female threaded body 101, a second female threaded spiral strip 115 as the left screw may be formed in the through hole portion 106a. In this case, the second female threaded spiral strip 115 engages with the second spiral groove 15 in the male threaded portion 13 of the male threaded body 10.

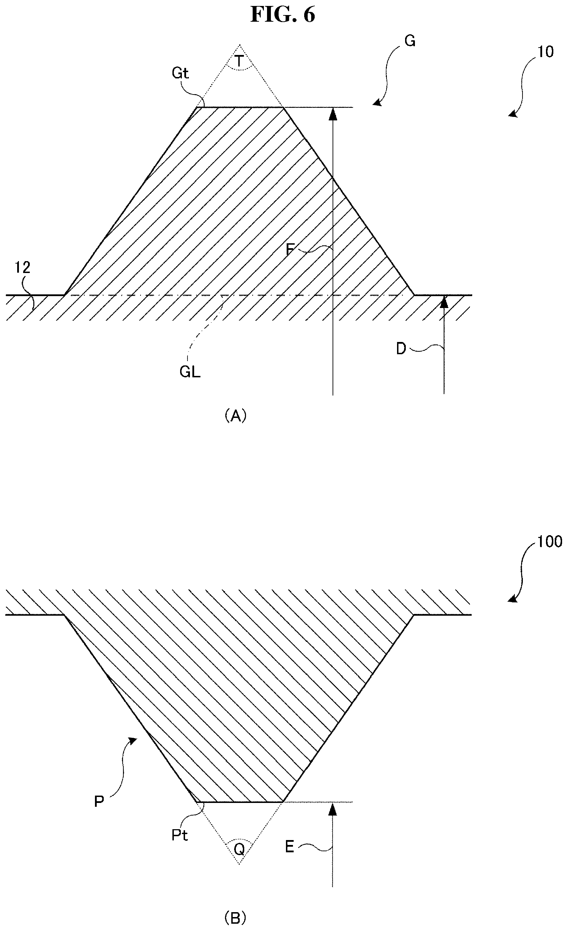

Hereinafter, a shape of a cross-section of the thread G formed in the male threaded portion 13 of the male threaded body 10 and cut along an axial direction and viewed in an axial-orthogonal direction will be described with reference to FIG. 6(A).

Also, referring to FIG. 6(B), a shape of a thread P of the first female threaded spiral strip 114 of the female threaded body 100 and/or the second female threaded spiral strip 115 of the female threaded body 101 is relatively set based on the shape of the thread G of the male threaded body 10. Therefore, a further description is omitted here.

Also, in the present embodiment, N may be assigned as an initial letter with respect to a nominal diameter of the male threaded body 10. For example, the male threaded body 10 of N16 indicates that a diameter F is 16 mm from an apex Gt of the thread G. The female threaded body 100 of N16 indicates that a root diameter of the thread is 16 mm.

A thread angle T of the thread G (in which the thread angle indicates an angle formed by a single pair of inclined surfaces extending from the apex to a valley of the thread G) may be set to 61° or more or 75° or less, and desirably, may be set to 63° or more or 73° or less. More desirably, the thread angle T may be set to 65° or more or 73° or less, and more specifically, 70°. A root diameter D of the thread G (i.e., an outer diameter in a case in which the thread G is absent in the shaft portion 12 of the male threaded body 10) may be set to 13.5 mm or more or 14.3 mm or less in the case of N16. In the case of N16, the root diameter D may be set to 13.5 mm or more or 14.3 mm or less. In the case of N24, the root diameter D may be set to 19.6 mm or more or 20.5 mm or less. In the case of N30, the root diameter D may be set to 25.8 mm or more or 26.7 mm or less. The term "root diameter" used herein corresponds to a diameter of a bottom portion of the valley, not an effective diameter used in the conventional metric thread.

Accordingly, referring to FIG. 6(B), even with respect to the female threaded body 100, a thread angle Q of the thread P may be set to 61° or more or 75° or more, and, desirably, may be set to 63° or more or 73° or less. More desirably, the thread angle Q may be set to 65° or more or 73° or less, and more specifically, 70°. Also, a diameter E of an apex Pt of the thread P may be set to 13.5 mm or more or 14.3 mm or less in the case of N16. In the case of N16, the diameter E may be set to 13.5 mm or more or 14.3 mm or less. In the case of N24, the diameter E may be set to 19.6 mm or more or 20.5 mm or less. In the case of N30, the diameter E may be set to 25.8 mm or more or 26.7 mm or less. Also, the diameter of the female screw may be set to be equal to or greater than the root diameter of the male threaded body.

### <Design method and design basis>

Hereinafter, a design method and design basis of the male threaded body 10 and the female threaded body 100 will be described. Also, an example of designing the male threaded body 10 with nominal diameter N16 is introduced.

### <Preparation of series of the male threaded body 10 and the female threaded body 100>

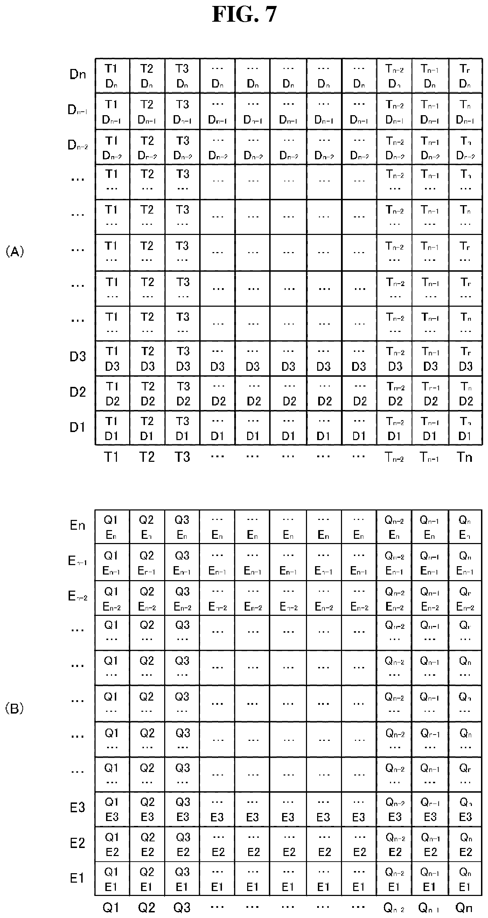

Referring to FIG. 7(A), with respect to the male threaded body 10 with the nominal diameter N16, a plurality of male threaded bodies for verification 10 (Tn, Dn) is prepared to fill a portion or all of a matrix condition including a plurality of different root diameters D1, D2, ··, Dn and a plurality of thread angles T1, T2, ···, Tn.

Also, the same number of female threaded bodies for verification 100 as the number of the plurality of male threaded bodies for verification 10 (Tn, Dn) are prepared to correspond thereto and screw therewith, respectively. That is, referring to FIG. 7(B), a plurality of female threaded bodies for verification 100 (Qn, En) is prepared to fill a portion of or all of a matrix condition including a plurality of different diameters E1, E2, ···, En and a plurality of different thread angles Q1, Q2, ···, Qn. In detail, the diameter En of the female threaded body for verification 100 (Qn, En) approximately matches the root diameter Dn of the male threaded body for verification 10 (Tn, Dn), and the thread angle Qn approximately matches the thread angle Tn of the male threaded body for verification 10 (Tn, Dn). Accordingly, a plurality of verification sets each in which the male threaded body for verification 10 (Tn, Dn) and the female threaded body for verification 100 (Qn, En) present at the same location of the matrices of FIG. 7(A) and FIG. 7(B) are provided as a pair.

Also, an axial length W (referred to as a length W associated with the axial direction in FIG. 1) of the female threaded body for verification 100 (Qn, En) is a predetermined ratio γ (0<γ<1) for the nominal diameter N16 to be common to all the test specimens, in a fastening strength test using the nominal diameter N16. That is, in this example of N16, the axial length W of the female threaded body for verification 100 (Qn, En) is set to 16 mm×γ. A value of W is calculated by multiplying each nominal diameter by the ratio γ that is a unique material value.

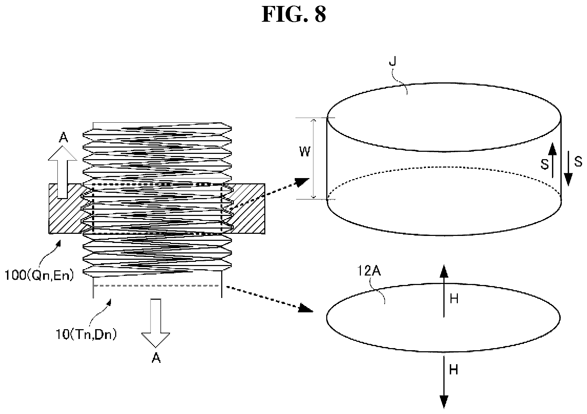

Referring to FIG. 8, the length W associated with the axial direction uses a value that is easily approximated by a tensile strength H that a cross-section 12A perpendicular to an axis of the shaft portion 12 of the male threaded body 10 may withstand and a shear strength S of a circumferential surface J that includes a base surface GL (refer to FIG. 6(A)) of the thread G of the male threaded body 10 in the length W associated with the axial direction. Here, the tensile strength H may be a value obtained by multiplying a cross-sectional area in the root diameter Dn by coefficient a1 and may be represented by H=π×Dn2×a1. The shear strength S may be a value obtained by multiplying a cylindrical area corresponding to the axial length W in the root diameter Dn by coefficient a2 and may be represented by S=π×Dn×W×a2.

The coefficient a1 or a2 may differ for each base material. According to review of the present inventor, in the present embodiment, when selecting a general-purpose steel material, for example, S45C or SCM435, as a base material and setting W as above, the tensile strength H and the shear strength S may be considerably close to each other. Accordingly, in terms of fastening strength of the female threaded body for verification 100 (Qn, En) and the male threaded body for verification 10 (Tn, Dn), substantially, the shear strength S may slightly increase, or the tensile strength H may slightly increase as the thread angle T or the root diameter D varies. Which is predominant may be verified based on the fastening strength test and a boundary between a shear strength S predominant state and a tensile strength H predominant state may be found through the test.

For convenience of description, a case in which the root diameter D or the thread angle T varies using the matrix of FIG. 7 is described. However, in practice, there may be no need to prepare the male threaded body for verification 10 (Tn, Dn) and the female threaded body for verification 100 (Qn, En) to fill all the locations of the matrix. Also, there may be no need to form the matrix. As described in the following, through a combination of the male threaded body for verification and the female threaded body for verification such that the root diameter D and the thread angle T vary within a predetermined range, any aspect capable of extracting n optimal value may be applied.

### <Boundary root diameter extracting process>

The fastening strength test is implemented by screwing the male threaded body for verification 10 (Tn, Dn) and the female threaded body for verification 100 (Qn, En) each constituting a single pair (hereinafter, referred to as a bolt and nut set for verification). Herein, referring to FIG. 8, the fastening strength test indicates a tensile test of relatively moving the male threaded body for verification 10 (Tn, Dn) and the female threaded body for verification 100 (Qn, En) to be separate from each other in a direction (refer to an arrow indicator A) away in the axial direction and compulsorily releasing a fastening state (a screwed state), however, is not limited thereto. In addition to a fatigue test of repeatedly separating the male threaded body 100 (Tn, Dn) and the female threaded body 100 (Qn, En), a so-called screw fastening test for verifying a torque, an axial force, and a rotational angle of a threaded body may be applied. A correlation between such test result and the result of the tensile test is verified. The fastening strength test may be implemented on all the bolt and nut sets for verification and whether the result thereof is a shaft fracture form in which fastening is released by separation from the shaft portion 12 of the male threaded body 100) or a thread collapse form in which the fastening is released by deformation or collapsing of the thread G is determined.

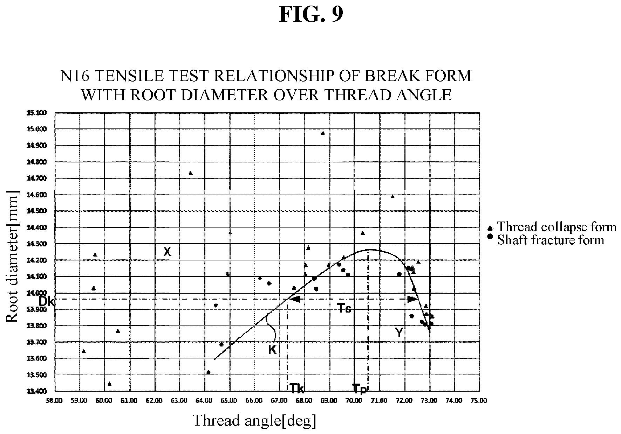

FIG. 9 illustrates an example of a graph of the determination result. In this graph, the thread angle Tn is set to a horizonal axis, the root diameter Dn is set to a vertical axis, the bolt and nut set for verification corresponding to the shaft fracture form is indicated with ○, and the bolt and nut set for verification corresponding to the thread collapse form is indicated with Δ. As known from this result, the graph is divided into two regions, i.e., a region X (thread collapse region X) in which the thread collapse form occurs and a region Y (shaft fracture region Y) in which the shaft fracture form occurs. A boundary line K therebetween may be clear on the graph. When a maximum root diameter value capable of causing the shaft fracture form with respect to a specific thread angle Tk is defined as a boundary root diameter Dk, the boundary line K indicates a correlation between a change of the thread angle Tk and a change of the boundary root diameter Dk.

For example, a design concept of setting the thread angle T to 68° and setting the root diameter D of the shaft portion to 14.1 mm or more belongs to the thread collapse region X. Therefore, it may be difficult to obtain the shaft fracture form when the fastening is released by the tensile test and there is a high probability that the thread collapse form may occur, and strength of the shaft portion may be useless accordingly. In the meantime, a design concept of setting the thread angle T to 68° and setting the root diameter D of the shaft portion to 13.6 mm may easily obtain the shaft fracture form when the fastening is released. However, the boundary root diameter Dk may be about 14.05 mm and, within this range, the root diameter D of the shaft portion may be set to be further great, which makes it possible to increase the tensile strength. In this aspect, the design is inefficient.

That is, in response to a change in the boundary root diameter Dk, a range of the boundary thread angle Tk (referred to as a boundary thread angle region Ts) that allows the male threaded body to be the shaft fracture form may be determined at the boundary line K.

### <Shaft fracture predominant thread angle selecting process>

When the boundary root diameter extracting process is completed, a thread angle (hereinafter, shaft fracture predominant thread angle Tp) at which the boundary root diameter Dk may reach a maximum value is selected within the boundary line K. Referring to the graph of FIG. 9, the shaft fracture predominant thread angle Tp is 70.5° from a peak value of the boundary line K. The shaft fracture predominant thread angle Tp may be explained as a thread angle at which the shaft fracture form is easy to occur in the case of releasing of fastening, that is, a thread angle at which the shear strength S of the thread G is highest, although the tensile strength is increased by significantly increasing a thickness of the shaft portion.

### <Thread angle determining process>

Accordingly, a design is implemented by applying the thread angle approximate to the determined shaft fracture predominant thread angle Tp to the actual male threaded body 10 and/or female threaded body 100 at the nominal diameter N16. For example, if the actual thread angle T is set to 70°, the root diameter D may be set to be large. In detail, the root diameter D may be set to, for example, about 14.25 mm.

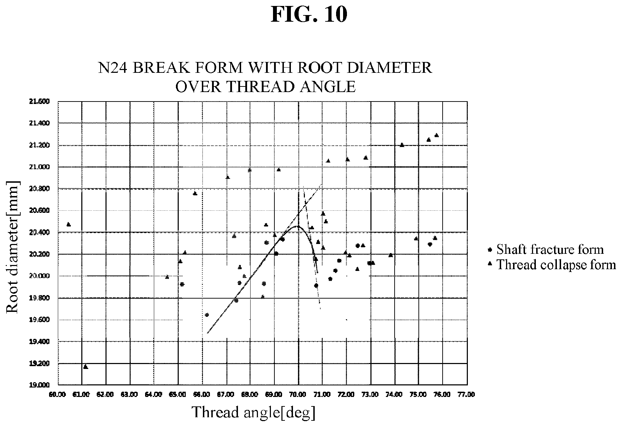

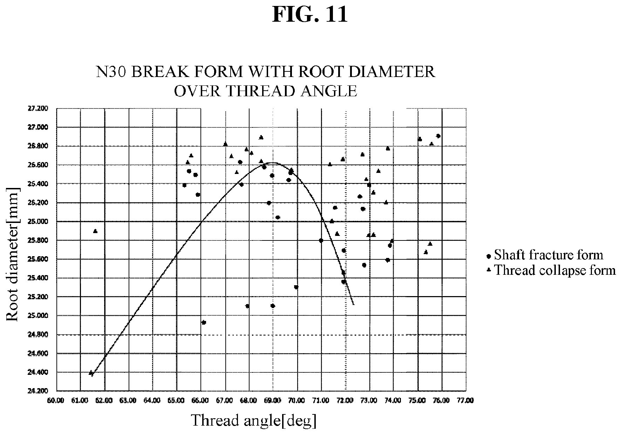

Also, although the design method in the case of the nominal diameter N16 is described with reference to FIG. 9, other nominal diameters may be used without being limited thereto. For example, FIG. 10 is a graph showing a verification result in the case of nominal diameter N24 and FIG. 11 is a graph showing a verification result in the case of nominal diameter N30. What is common in the graphs, the shaft fracture predominant thread angle Tp may be within the range of 61° or more or 75° or less, and, more desirably, within the range of 65° or more or 73° or less, and approximately around 70°. That is, in the case of the male threaded body 10 in the structure according to the present embodiment, the thread angle of the thread is not 60° that is a common value in the related art. That is, a value greater than 60° may be suitable and a value around 70° may be an optimal value.

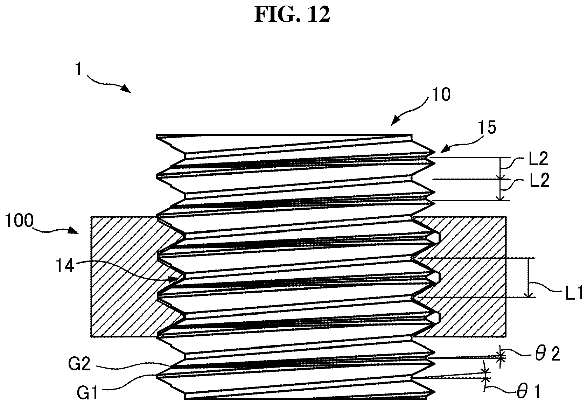

Also, in the male threaded body 10 and the female threaded body 100, a pair of the first spiral groove 14 and the female threaded spiral strip 114 and a pair of the second spiral groove 15 and the female threaded spiral strip 115 are in inverse relationship (having the same lead angle and opposite lead directions. However, embodiments are not limited thereto. For example, referring to FIG. 12, the first spiral groove 14 and the female threaded spiral strip 114, and the second spiral groove 15 and the female threaded spiral strip 115 having the same lead direction (L1, L2) and different lead angle may be used. In this case, by further superimposing another spiral groove having a different angle on the first spiral groove 14, the first spiral groove 14 having the lead L1 (lead angle α1) and the second spiral groove 15 having the lead L2 (lead angle α2) are formed with a screw direction aligned. In this case, a first thread G1 of the first spiral groove 14 and a second thread G2 of the second spiral groove 15 are not shared and separate. The embodiments may be applied to at least one or both of the threads G1 and G2. Here, a thread angle of the first thread G1 and a thread angle of the second thread G2 may differ from each other.

Although the embodiments are described based on an example in which the male threaded body 10 is in a double helical structure, the embodiments are not limited thereto. Although the design procedure is applied even to the male threaded body 10 in a single helical structure, an optimal thread angle may be clarified theoretically and/or experimentally.

Also, the embodiments are not limited to the above-described embodiments and various modifications may be made thereto without departing from the spirit embodiment.

### Explanation of symbols

1 fastening structure
10 male threaded body
12 shaft portion
13 male threaded portion
100 female threaded body
106 cylindrical member
G, P thread

## Claims

1. A male threaded body comprising:
a shaft portion;
a first spiral groove formed on a circumferential surface of the shaft portion and set to be an appropriate lead angle and/or lead direction; and
a second spiral groove formed on the circumferential surface of the shaft portion and set to be a lead angle and/or lead direction that is different from the lead angle and/or lead direction of the first spiral groove,
wherein the first spiral groove and the second spiral groove have a thread portion formed by overlapping on the same region in an axial direction of the shaft portion, and
when a cross-section of the thread portion cut along the axial direction is viewed in an axial-orthogonal direction, a thread angle formed by a single pair of inclined surfaces extending from an apex to a valley of the thread is set to 61° or more or 75° or less.

2. The male threaded body of claim 1, wherein the thread angle is set to 73° or less.

3. The male threaded body of claim 1 or 2, wherein the thread angle is set to 65° or more.

4. The male threaded body of any of claims 1 to 3, wherein the thread angle is set within the range of 70°±3°.

5. A female threaded body comprising:
a female threaded portion,
wherein, when a cross-section of a female thread portion constituting the female threaded portion and cut along an axial direction is viewed in an axial-orthogonal direction, a thread angle formed by a single pair of inclined surfaces extending from an apex to a valley of a thread of the female threaded portion is set to 61° or more or 75° or less.

6. The female threaded body of claim 5, wherein the female threaded body is configured to screw with the male threaded body of any of claims 1 to 4.

7. A threaded body design method comprising:
a boundary root diameter extracting process of, in the case of implementing a fastening strength test of performing a relative separation in an axial direction by screwing a female threaded body for verification into a male threaded body for verification using a plurality of male threaded bodies for verification having a constant nominal diameter and different thread angles and root diameters and a plurality of female threaded bodies for verification configured to screw with the male threaded bodies for verification, extracting a degree of variation caused by the thread angle variate from the root diameter (hereinafter, referred to as boundary root diameter) around a boundary of a shaft fracture form and a thread collapse form by causing break of both the shaft fracture form in which a fastening state is released by separating the male threaded body for verification from a shaft portion and the thread collapse form in which the fastening state is released by deforming or shearing of a thread of the male threaded body for verification;
a shaft fracture predominant thread angle selecting process of selecting the specific thread angle (hereinafter, shaft fracture predominant thread angle) based on the degree of variation of the boundary root diameter and at which the boundary root diameter is maximized; and
a thread angle determining process of applying a thread angle close to the shaft fracture predominant thread angle to the actual male threaded body and/or the female threaded body in the nominal diameter.

8. The threaded body design method of claim 7, wherein the boundary root diameter extracting process comprises:
an individual boundary root diameter extracting process of, in the case of implementing the fastening strength test of performing the relative separation in the axial direction by screwing a female threaded body for verification with a male threaded body for verification using a plurality of male threaded bodies for verification having the constant thread angle and nominal diameter and different root diameters and a plurality of female threaded bodies for verification configured to screw with the male threaded bodies for verification, extracting the specific root diameter (hereinafter, boundary root diameter) around the boundary of the shaft fracture form and the thread collapse form by causing break of both the shaft fracture form in which fastening is released by separating the male threaded body for verification from the shaft portion and the thread collapse form in which fastening is released by deforming or shearing of the thread of the male threaded body for verification; and
a process of extracting the degree of variation of the boundary root diameter caused by the thread angle variate by selecting the different plurality of thread angles and by repeatedly implement the individual boundary root diameter extracting process based on each thread angle.

9. A male threaded body designed based on the threaded body design method of claim 7 or 8.

10. A female threaded body designed based on the threaded body design method of claim 7 or 8.

11. A thread structure, wherein the thread structure is applied to a male threaded body and/or a female threaded body, and
a thread angle formed by a single pair of inclined surfaces extending from an apex to a valley of a thread in the thread structure is set to 61° or more or 75° or less.
